# EUROPÄISCHE PATENTSCHRIFT

(11) **EP 2 682 625 B1**
(45) Veröffentlichungstag und Bekanntmachung des Hinweises auf die Patenterteilung: **21.11.2018**
(21) Anmeldenummer: 13173639.9
(22) Anmeldetag: 25.06.2013
(51) Int. Cl.: F16D 13/75

(54) **Reibungskupplung mit einer kraftschlüssigen Bremseinrichtung**
Friction clutch with a positive braking device
Accouplement à friction doté d'un dispositif de freinage à complémentarité de force

(30) Priorität: 02.07.2012 DE 102012211409
(43) Veröffentlichungstag der Anmeldung: 08.01.2014
(73) Patentinhaber: Schaeffler Technologies AG & Co. KG, 91074 Herzogenaurach (DE)
(72) Erfinder: Hartz, Fabian, 77830 Bühlertal (DE); Gütle, Martin, 77654 Offenburg (DE); Ahnert, Gerd, 77880 Sasbach (DE)

(56) Entgegenhaltungen:
- DE-A1-102009 032 332
- DE-A1-102009 049 258
- DE-A1-102010 035 121
- DE-A1-102011 086 985
- DE-A1-102011 107 838

## Beschreibung

Die Erfindung betrifft eine Reibungskupplung gemäß dem Oberbegriff des Patentanspruchs 1. Insbesondere betrifft die Erfindung eine Reibungskupplung mit einer Nachstelleinrichtung mit einem Verstellring, der mittels einer von einer Antriebsklinke verdrehten Spindel nachgestellt wird. Um ein unbeabsichtigtes Verdrehen der Spindel zu verhindern, ist eine Keileinrichtung vorgesehen, welche gegenüber der Spindel und/oder dem Ritzel ein Brems- oder Reibmoment aufbaut.

Eine Reibungskupplung mit einer weggesteuerten Nachstelleinrichtung ist beispielsweise aus DE 10 2009 035 225 A1 bekannt, bei der eine sich in Abhängigkeit vom Abstand eines Betätigungssystems mit einer Tellerfeder und einer Anpressplatte axial verlagernde Antriebsklinke auf ein Ritzel einer Spindel wirkt, wobei eine auf der Spindel aufgenommene Spindelmutter bei Verdrehung der Spindel einen zwischen der Anpressplatte und der Tellerfeder angeordneten Rampenring eines Rampensystems relativ zu einer Gegenrampe der Anpressplatte verdreht, wodurch der ursprüngliche Abstand des Betätigungssystems zur Anpressplatte wieder hergestellt wird. Dabei gleitet während des Hubs einer Gegendruckplatte gegenüber der Anpressplatte die Antriebsklinke auf den Zähnen des Ritzels und rastet bei einem vorgegebenen Verschleiß in eine Zahnlücke zwischen zwei Zähnen ein. Die Antriebsklinke nimmt beim nächsten Öffnungsvorgang der Reibungskupplung das Ritzel formschlüssig mit und verdreht dabei das Ritzel und damit die Spindel, wodurch die Spindelmutter entlang der Spindel bewegt wird und den Rampenring um einen entsprechenden Winkelbetrag verdreht, um die Reibungskupplung dadurch nachzustellen. Infolge von Vibrationen oder Masse- und Trägheitseinflüssen kann eine ungewünschte Verdrehung eine Über- oder Unterkompensation verursachen.

Darüber hinaus ist eine Reibungskupplung gemäß dem Oberbegriff des Patentanspruchs 1 aus der DE 10 2009 049 258 A1 bekannt.

Es ist Aufgabe der vorliegenden Erfindung, eine Nachstelleinrichtung für eine Reibungskupplung bereitzustellen, die ein ungewolltes Verdrehen der Nachstelleinrichtung verhindert. Es ist weiterhin die Aufgabe der Erfindung, eine verbesserte Nachstellcharakteristik bereitzustellen.

Die Lösung der Aufgabe erfolgt erfindungsgemäß durch die Merkmale des Anspruchs 1. Bevorzugte Ausgestaltungen der Erfindung sind in den Unteransprüche angegeben.

Die Bremseinrichtung kann durch Klemmen der Spindel gegenüber einem an der Anpressplatte angeordneten Spindelhalter gebildet werden. Hierzu können an der Bremseinrichtung im einfachsten Fall zwei an der Reibfläche vorgespannte, sich bezüglich der Drehachse der Spindel, insbesondere diametral, gegenüberliegende Gegenreibflächen an der Innenseite eines Federringes vorgesehen sein, so dass sich die auf die Spindelachse wirkenden Normalkräfte der Gegenreibflächen aufheben. Zur besseren Fixierung der Bremseinrichtung auf der Spindel beziehungsweise deren Reibfläche hat es sich allerdings als vorteilhaft erwiesen, mehrere, vorzugsweise drei über den Umfang des Federringes verteilte Gegenreibflächen vorzusehen, deren Normalkräfte sich in der Summe aufheben können. Durch die Verwendung von drei auf der Reibfläche vorgespannten Gegenreibflächen erfolgt eine entsprechende Zentrierung des Federringes gegenüber der Reibfläche, so dass eine Aufnahme des Bauteils an dem Halter der Spindel, der Anpressplatte oder dergleichen nur noch der Abstützung des durch den Reibeingriff zwischen Reibflächen und Gegenreibflächen wirksamen Brems- oder Reibmoments erfolgen muss. Es können ein oder mehrere, insbesondere axial, aneinander angeordnete Federringe vorgesehen sein. Zur Einstellung eines definierten Reibmoments kann der Federring mehrere, vorzugsweise drei über den Umfang verteilte und nach innen gerichtete Gegenreibflächen aufweist. An der Spindel kann die vorzugsweise kreisrunde Reibfläche direkt eingearbeitet sein. Eine entsprechende Oberfläche kann eingearbeitet sein. Die Reibfläche kann auch durch ein axial erweitertes Ritzel gebildet sein.

Die federbelastete Keileinrichtung kann in Form eines Keiles ausgebildet sein, welcher die Spindel und/oder das Ritzel eines Spindeltriebes kontaktieren kann, wobei der Keil mit durch eine Feder mit einer Kraft beaufschlagt sein kann, wodurch die federbelastete Keileinrichtung auf die Spindel und/oder das Ritzel wirken kann. Die Keileinrichtung kann die durch die Feder auf den Keil ausgeübte Kraft auf die Spindel und/oder das Ritzel übertragen, durch welche der Spindeltrieb, insbesondere die Spindel und/oder das Ritzel, verlagert und gegen eine Anlagefläche oder Kontaktfläche gepresst werden kann. Durch das Anpressen des Spindeltriebes gegen die Kontaktfläche können zusätzlich zu der Bremseinrichtung Reibungskräfte auf den Spindeltrieb einwirken, wodurch die Sperrwirkung gegen ein unbeabsichtigtes Verstellen des Spindeltriebes verbessert werden kann. Bei der Verschleißnachstellung der Reibungskupplung kann die Keileinrichtung mittelbar oder unmittelbar durch die Antriebsklinke mit einer Kraft beaufschlagt und von dem Spindeltrieb, insbesondere der Spindel und/oder dem Ritzel, wegbewegt werden. Dadurch diese Verschiebung des Keils weg von dem Spindeltrieb kann der Spindeltrieb von der Anlagefläche wegbewegen werden, wodurch zur Drehung des Spindeltriebs ein geringeres Moment erforderlich ist. Bei einem nicht angetriebenen Ritzel klemmt der Keil der Keileinrichtung den Spindeltrieb, insbesondere die Spindel und/oder das Ritzel, und bewirkt somit ein vergrößertes Rückstellmoment gegenüber einer Reibungskupplung mit einer Bremseinrichtung. Bei einem Wirken der Bremseinrichtung und der Keileinrichtung ist der Spindeltrieb, insbesondere die Spindel und/oder das Ritzel, in einer ersten Position. Bei einer Verschleißnachstellung der Reibungskupplung, in welcher die Bremseinrichtung auf den Spindeltrieb einwirkt, ist der Spindeltrieb in einer zweiten Position. Durch das Antreiben des Ritzels durch die Antriebsklinke kann eine Kraft, insbesondere senkrecht zur Drehachse der Spindel, in den Spindeltrieb eingeleitet werden, wodurch der Spindeltrieb von der ersten Position entlang einer Verlagerungsrichtung in die zweite Position verlagert werden. Die Verlagerungsrichtung kann im Wesentlichen parallel zu der Kraft der Antriebsklinke ausgebildet sein und/oder im Wesentlichen in axialer Richtung, beispielsweise in Richtung der Anpressplatte, gerichtet sein.

In der ersten Position des Spindeltriebes wirken die Bremseinrichtung und die Keileinrichtung auf den Spindeltrieb, wodurch die auf den Spindeltrieb wirkenden Klemmkräfte deutlich erhöht werden können, so dass ein ungewolltes Rückdrehen des Nachstellantriebes sicherer vermieden werden kann. Ein unbeabsichtigtes Vordrehen des Nachstellantriebes ohne sensierten Verschleiß kann ebenfalls sicherer vermieden werden. Weiter kann durch die auf den Spindeltrieb wirkende Bremseinrichtung und Keileinrichtung die stufenlose oder minimal gestufte Nachstellcharakteristik der Reibungskupplung verbessert werden, da in der zweiten Position des Spindeltriebes lediglich die Bremseinrichtung auf den Spindeltrieb wirkt, wodurch gegenüber der ersten Position des Spindeltriebes ein verringertes Nachstellmoment erforderlich ist und die zur Verschleißnachstellung aufzubringenden Kräfte, beispielsweise durch die Antriebsklinke, verringert werden können. Zudem wird ein einfaches Rückstellen des Nachstellmechanismus, beispielsweise während der Montage oder zur Wiederverwendung der Kupplungsdruckplatte nach Kupplungsscheibenverschleiß, ermöglicht.

In einer bevorzugten Ausgestaltung der Erfindung ist die Keileinrichtung in die Bremseinrichtung, insbesondere in den Federring der Bremseinrichtung, integriert. Der Federring kann eine Mehrzahl von Gegenreibflächen aufweisen, welche in der ersten Position, in der ein Verdrehen des Spindeltriebes verhindert werden soll, den Spindeltrieb, insbesondere eine Reibfläche des Spindeltriebes, kontaktieren. Die Reibfläche kann an der Spindel und/oder dem Ritzel angeordnet sein. Bei einer Verschleißnachstellung kann der Spindeltrieb, insbesondere die Spindel und/oder das Ritzel, von der ersten Position in die zweite Position in einer Spindelhalterung verlagert werden. Der anpressplattenseitig montierte Federring kann derart ausgebildet und angeordnet sein, dass nach einem Verschieben des Spindeltriebes in die zweite Position entlang der Verlagerungsrichtung weniger Gegenreibflächen in Kontakt mit der Reibfläche sind als in der ersten Position. Insbesondere kann in der zweiten Position mindestens eine Gegenreibfläche in Kontakt mit der Reibfläche sein. Die Verlagerung des Spindeltriebes wirkt dabei wie das Lösen des Keils der Keileinrichtung in der zweiten Position, wobei das zum Drehen des Spindeltriebs benötigte Drehmoment verringert wird. Der Federring kann geschlossen sein und bei einer Verlagerung des Spindeltriebes elastisch verformbar sein, wodurch ein Aufweiten des Federringes und ein zumindest teilweises Ablösen von Gegenreibflächen von dem Spindeltrieb ermöglicht werden kann. Die Gegenreibflächen können derart innenseitig an dem Federring angeordnet sein, dass die Anzahl von Gegenreibflächen oberhalb der Drehachse der Spindel und/oder des Ritzels unterschiedlich oder gleich ist als die Anzahl von Gegenreibflächen unterhalb der Drehachse. Dadurch kann bei einer Verlagerung des Spindeltriebes und damit der Drehachse die Anzahl der Gegenreibflächen verringert werden, die die Reibfläche kontaktieren. Hierdurch kann die zum Verdrehen des Spindeltriebes in der zweiten Position benötigte Kraft und Drehmoment im Vergleich zu ersten Position verringert werden. Eine Gegenreibfläche ist oberhalb der Drehachse angeordnet, wenn sie in der ersten Position an einer der Verlagerungsrichtung entgegen gerichteten Hälfte eines Spindelquerschnittes die Reibfläche und/oder die Spindel kontaktiert, so dass die Gegenreibfläche in der zweiten Position nicht in Kontakt mit der Reibfläche und/oder der Spindel ist. Eine Gegenreibfläche ist unterhalb der Drehachse angeordnet, wenn sie in der ersten Position an einer in Verlagerungsrichtung gerichteten Hälfte des Spindelquerschnittes die Reibfläche und/oder die Spindel kontaktiert, so dass die Gegenreibfläche in der zweiten Position in Kontakt mit der Reibfläche und/oder der Spindel ist. Die Verlagerungsrichtung kann im Wesentlichen senkrecht zu und in Richtung der Anpressplatte ausgerichtet sein, wobei eine Position oberhalb an einer der Anpressplatte abgewandten Seite des Spindeltriebes sein kann und eine Position unterhalb an einer der Anpressplatte zugewandten Seite. Im Falle dass das Ritzel nicht angetrieben wird und keine Verschleißnachstellung gewünscht ist, umfasst die Ringfeder die Reibfläche, den Spindeltrieb, die Spindel und/oder das Ritzel und bewirkt durch den Wirkeingriff aller Gegenreibflächen ein hohes Rückstellmoment. Durch die Integration der Keileinrichtung in die Bremseinrichtung können die Konstruktion und die Montage vereinfacht werden.

Gemäß einer bevorzugten Ausgestaltung der Erfindung weist der Federring einen Haltesteg zur Fixierung des Federringes relativ zu der Drehachse in axialer Richtung auf. Der Haltesteg kann anpressplattenseitig derart befestigt sein, dass der Federring im Wesentlichen in axialer Richtung spielfrei fixiert ist, so dass eine Verlagerung des Spindeltriebes, insbesondere in axiale Richtung, eine elastische Verformung des Federringes bewirken kann. Der Haltesteg kann derart ausgebildet sein, dass der Federring, insbesondere in radialer Richtung, selbstzentrierbar gegenüber dem Spindeltrieb, der Reibfläche ist. Dadurch kann eine vereinfachte Montage und ein reduzierter Einstellaufwand ermöglicht werden.

In einer weiteren Ausgestaltung ist der Haltesteg oberhalb der Drehachse anpressplattenseitig angeordnet. Der Haltesteg kann oberhalb der Drehachse des Spindeltriebes angeordnet sein und kann oberhalb der Drehachse anpressplattenseitig befestigt sein. Der Haltesteg kann in montiertem Zustand im Wesentlichen parallel zu der Verlagerungsrichtung des Spindeltriebes angeordnet sein, wodurch eine bessere Fixierung des Federringes insbesondere in Verlagerungsrichtung ermöglicht werden kann, wodurch die elastische Aufweitung des Federringes verbessert werden kann.

Gemäß einer weiteren bevorzugten Ausgestaltung der Erfindung ist der Haltesteg tangential an dem Federring ausgebildet. Der Haltesteg kann exzentrisch an dem Federring angeordnet sein, wobei bei einer Verlagerung des Spindeltriebes eine elastische Verformung des Federringes erleichtert werden kann.

Gemäß noch einer weiteren bevorzugten Ausgestaltung der Erfindung ist vorgesehen, dass die Anzahl der oberhalb der Drehachse angeordneten Gegenreibflächen größer ist als die Anzahl der unterhalb der Drehachse angeordneten Gegenreibflächen. Beispielsweise können sich zwei obere Gegenreibflächen von der Reibfläche, der Spindel und/oder dem Ritzel bei einer Verlagerung in die zweite Position lösen. Lediglich mindestens eine untere Gegenreibfläche kann durch Reibung und seine Federkraft ein Bremsmoment auf die Reibfläche, den Spindeltrieb, die Spindel und/oder das Ritzel übertragen. Dadurch kann bei einer Verlagerung des Spindeltriebes und damit der Drehachse die Anzahl der Gegenreibflächen verringert werden, die die Reibfläche kontaktieren.

Vorzugsweise weist der Federring, insbesondere diametral gegenüber dem Haltesteg, einen Schlitz auf. Durch einen Schlitz in dem Federring, insbesondere diametral gegenüber dem Haltesteg, kann ein Öffnen des Federringes und eine Anlage unter entsprechender Vorspannung an der Spindel oder dem Spindeltrieb ermöglicht werden, wodurch die Montage erleichtert werden kann. Zudem kann ein symmetrisch, insbesondere dem Haltesteg gegenüberliegend, angeordneter Schlitz ein in beide Drehrichtungen gleichgroßes Bremsmoment ermöglichen. Darüber hinaus kann der geschlitzte Federring leichter bei einer Verlagerung des Spindeltriebes aufgeweitet werden.

Gemäß einer bevorzugten Ausgestaltung der Erfindung ist vorgesehen, dass der Schlitz des Federringes stirnseitig an einem tangential an dem Federring ausgebildeten Haltesteg ausgebildet ist. Der Haltesteg kann tangential an dem Federring angeordnet sein, wobei der Schlitz in dem Federring derart angeordnet ist, dass der Haltesteg an dem Schlitz ein stirnseitiges Ende ausbildet, von dem der Federring in Richtung des Haltesteges in einem Spitzenwinkel zurückspringt. Der Schlitz kann unmittelbar benachbart zu dem Haltesteg in dem Federring angeordnet sein. Dadurch kann ein drehrichtungsabhängiger Schlingeneffekt in der ersten Position ermöglicht werden, wobei gleichzeitig ein Verformen, insbesondere Aufweiten, des Federringes in der zweiten Position erleichtert werden kann. In der zweiten Position sind weniger Gegenreibflächen im Wirkeingriff mit dem Spindeltrieb als in der ersten Position, wobei in der zweiten Position kein Schlingeneffekt auftritt.

Gemäß einer weiteren bevorzugten Ausgestaltung der Erfindung ist der Haltesteg an dem Spindelhalter angeordnet. Um das Bremsmoment beziehungsweise Reibmoment abzustützen und dennoch eine Selbstzentrierung zu ermöglichen, kann der Haltesteg des Federringes schwimmend und drehfest an dem Spindelhalter angeordnet sein. Der Haltesteg und die Ringfeder können als Stanzteil ausgeführt sein und der Haltesteg kann durch Umformen formschlüssig an dem Spindelhalter befestigt sein.

Die Erfindung betrifft ferner einen Antriebsstrang für ein Kraftfahrzeug mit einer Reibungskupplung, die wie vorstehend beschrieben aus- und weitergebildet sein kann. Durch die erfindungsgemäße Ausgestaltung der Reibungskupplung kann ein ungewolltes Verdrehen der Nachstelleinrichtung verhindert werden. Zudem kann die Nachstellcharakteristik der Reibungskupplung verbessert werden.

Nachfolgend wird die Erfindung unter Bezugnahme auf die anliegenden Zeichnungen anhand bevorzugter Ausführungsbeispiele exemplarisch erläutert.

Es zeigen:
- Fig. 1:: einen Teilschnitt durch eine Reibungskupplung mit der vorgeschlagenen Nachstelleinrichtung;
- Fig. 2:: eine Anpressplatte der Reibungskupplung in Fig. 1 mit Verdreheinrichtung;
- Fig. 3:: eine schematische Ansicht einer Keileinrichtung;
- Fig. 4a:: eine schematische Ansicht eines Federringes in einer ersten Position;
- Fig. 4b:: eine schematische Schnittansicht des in Fig. 4a gezeigten Federringes an einem Spindelhalter;
- Fig. 5:: eine schematische Schnittansicht des in Fig. 4a gezeigten Federringes in einer zweiten Position.

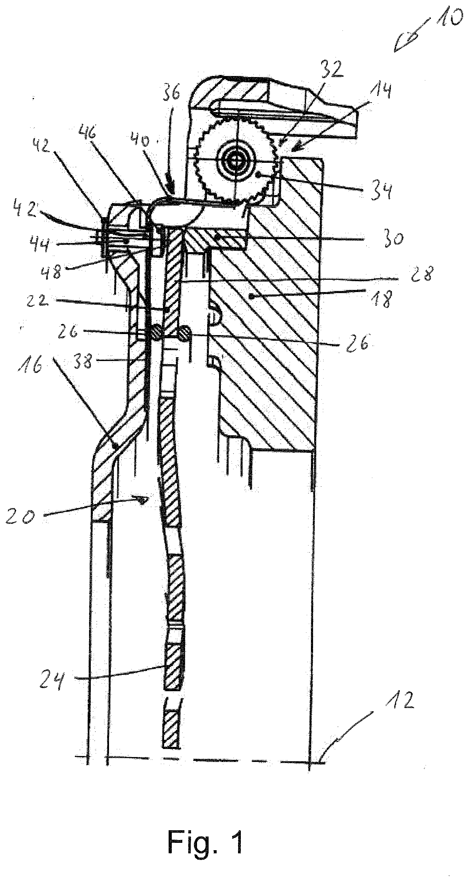

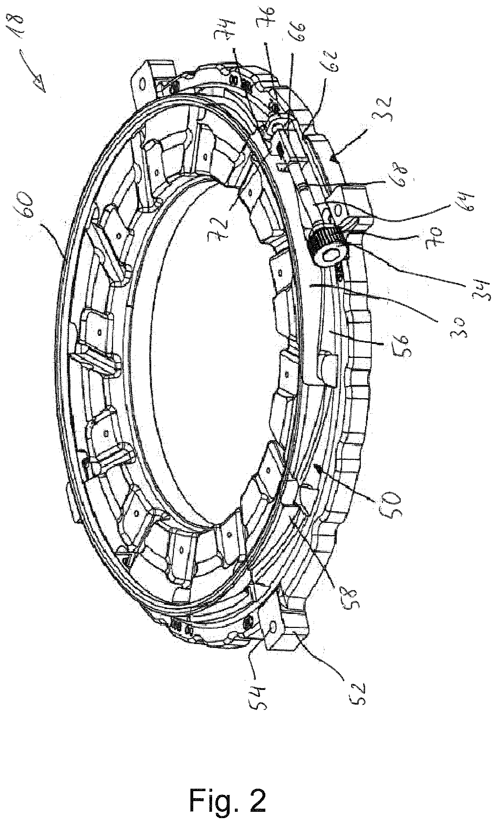

Fig. 1 zeigt einen Teilschnitt eines Ausführungsbeispiels einer Reibungskupplung 10 längs durch deren Rotationsachse 12, wobei nur eine Hälfte mit der Nachstelleinrichtung 14 dargestellt ist. Die Reibungskupplung 10 umfasst ein Kupplungsgehäuse 16, in dem eine Anpressplatte 18 drehfest und axial verlagerbar aufgenommen ist. In dem Kupplungsgehäuse 16 ist ein Hebelsystem 20 in Form einer Tellerfeder 22 aufgenommen, die radial innen Tellerfederzungen 24 aufweist, die von einem Ausrücksystem axial verlagerbar sind. Die Reibungskupplung 10 ist eine sogenannte gedrückte Reibungskupplung 10, die bei einer Beaufschlagung der Tellerfederzungen 24 durch Drücken ausgerückt werden kann. Hierzu ist die Tellerfeder 22 mittels zweier Drahtringe 26 an dem Kupplungsgehäuse 16 verschwenkbar abgestützt, wobei der radial äußere Kraftrand 28 die Anpressplatte 18 gegenüber einer nicht dargestellten Gegendruckplatte unter Verspannung von ebenfalls nicht dargestellten Reibbelägen verspannt. Hierzu ist zwischen der Anpressplatte 18 und der Tellerfeder 22 ein Rampenring 30 verspannt, der wie aus Fig. 2 ersichtlich, mit der Anpressplatte 18 und einer Verdreheinrichtung 32 mit einem Ritzel 34 zusammenarbeitet. Die Steuereinrichtung 36 wird von einem Federelement 38 gebildet, das am radial verlaufenden Deckelteil des Kupplungsgehäuses 16 angebracht ist und einen axial abgebogenen Abschnitt, der die Antriebsklinke 40 bildet, aufweist, die gegen das Ritzel 34 radial verspannt ist. Ein Anschlag 42, der das vorgespannte Federelement 38 in Richtung Anpressplatte 18 begrenzt, wird durch einen Bolzen 44 oder Niet gebildet, der das Federelement 38 durchgreift und mittels eines Kopfes 46 einen Axialanschlag für das Federelement 38 bildet. An seinem anderen Ende ist der Bolzen 44 axial begrenzt gegen einen Anschlag 42 verlagerbar in dem Kupplungsgehäuse 16 aufgenommen, so dass bei einer Beaufschlagung des Kopfes 46 durch eine Anlagefläche 48 der Tellerfeder 22 bei einem großen Ausrückweg der Reibungskupplung 10 der Bolzen 44 axial entgegen der Vorspannkraft des Federelements 38 verlagert wird, wodurch diese mitgenommen wird und eine gegebenenfalls stattfindende Nachstellung beendet wird.

Fig. 2 zeigt ein Ausgestaltungsbeispiel einer Anpressplatte 18 mit einem Rampensystem 50 und der Verdreheinrichtung 32. Die Anpressplatte 18 weist bekannte Elemente zur Aufnahme am Kupplungsgehäuse auf, beispielsweise angeformte und gegebenenfalls nachgearbeitete Aufnahmen 52 mit Öffnungen 54 zur Befestigung von Energiespeichern wie Blattfedern, die eine drehfeste und axial verlagerbare Anbindung an das Kupplungsgehäuse erlauben, wobei eine Vorspannung der Energiespeicher in der Weise erfolgt, dass die Anpressplatte 18 entgegen der Wirkung der Energiespeicher durch Krafteinwirkung des Hebelsystems geschlossen wird und nach Abbau der Anpresskraft durch das Hebelsystem durch die entspannende Wirkung der Energiespeicher in die offene Stellung zurückkehrt. An der Anpressplatte 18 sind auf einem vorgegebenen Radius über den Umfang verteilte Gegenrampen 56 eingearbeitet, die bei einer Darstellung der Anpressplatte 18 in einem Schmiedeverfahren im Rohling bereits angeformt und spanabhebend feinbearbeitet sein können. Alternativ kann beispielsweise ein Pressteil oder ein Kunststoffteil auf der Anpressplatte aufgelegt und befestigt sein. Korrespondierend zu den Gegenrampen 56 ist der Rampenring 30 entsprechenden Durchmessers mit über den Umfang verteilten entsprechenden Rampen 58 auf die Gegenrampen 56 gelegt, der eine Ringfläche 60, die eine Anlagefläche für das Hebelsystem bildet, aufweist.

Der Rampenring 30 kann zumindest für die Montage verliergesichert auf den Gegenrampen 56 fixiert sein. Im einfachsten Fall werden nach Auflegen des Rampenrings 30 sofort das Hebelsystem und das Kupplungsgehäuse montiert. Die Verdreheinrichtung 32 für den Rampenring 30 ist auf der Anpressplatte 18 mittels eines Spindelhalters 62 aufgenommen, der aus einem Blechbügel gebildet und mit der Anpressplatte 18 vernietet oder in anderer Weise befestigt sein kann. Im Spindelhalter 62 ist eine Spindel 64 gelagert, auf der die Spindelmutter 66 auf dem Spindelgewinde 68 gegen Verdrehung gesichert, beispielsweise mittels einer flächigen Anlage am Spindelhalter 62, aufgenommen ist. An der Spindel 64 ist das Ritzel 34 drehfest angeordnet, beispielsweise mittels eines Mehrkants. Das Ritzel 34 kann auch in anderer Weise befestigt sein oder direkt aus der Spindel 64 ähnlich einer Schraube mit Kopf gefertigt sein. In das Ritzel 34 ist ein Umfangsprofil 70, beispielsweise eine Verzahnung, eingebracht, beispielsweise eingerollt. Die Spindelmutter 66 greift mittels eines Außenprofils 72 formschlüssig in Ausnehmungen 74 des Rampenrings 30 ein. Bei einer Verdrehung des Ritzels 34 durch eine nicht dargestellte, am Kupplungsgehäuse aufgenommene Steuereinrichtung wird die Spindel 64 mit dem Spindelgewinde 68, dessen Steigung so ausgestaltet ist, dass eine Verdrehung der Spindelmutter 66 selbsthemmend ist, verdreht und die Spindelmutter 66 axial längs der Spindel 64 verlagert. Mittels eines Eingriffs der Außenprofile 72 der Spindelmutter 66 in die Ausnehmungen 74 des Rampenrings 30 wird dieser verdreht und die Ringfläche 60 des Rampenrings 30 gegenüber der Anpressplatte 18 axial verlagert. Die Fig. 2 zeigt das Rampensystem 50 im Neuzustand. Eine Verlagerung der Rampen 58 gegenüber den Gegenrampen 56 ist noch nicht erfolgt, die Spindelmutter 66 befindet sich im Wesentlichen an der dem Ritzel 34 abgewandten Lasche 76 des Spindelhalters 62.

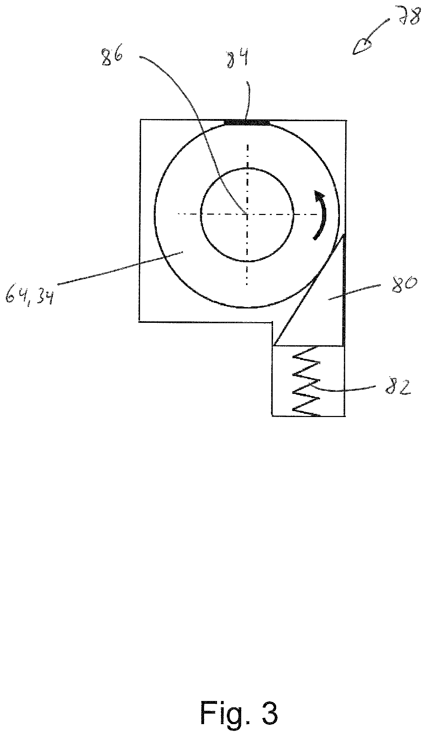

In Fig. 3 ist eine federbelastete Keileinrichtung 78 in einer ersten Position dargestellt, in der keine Nachstellbewegung beabsichtigt ist. Die federbelastete Keileinrichtung 78 weist einen Keil 80 auf, welcher durch eine Feder 82 mit einer Kraft beaufschlagt wird, welche in Richtung der Spindel 64 wirkt. Der Keil 80 kann die Spindel 64 und/oder das Ritzel 34 kontaktieren, wobei durch die auf den Keil 80 wirkende Kraft die Spindel 64 und/oder das Ritzel 34 verlagert werden können. Durch die Verlagerung kann die Spindel 64 und/oder das Ritzel 34 gegen eine Kontaktfläche 84 gepresst werden und diese kontaktieren. Durch das Anpressen an die Kontaktfläche 84 wirken Reibungskräfte auf die Spindel 64 und/oder das Ritzel 34, wodurch ein unbeabsichtigtes Verdrehen der Spindel 64 und/oder des Ritzels 34 erschwert werden kann. Eine Verdrehung der Spindel 64 und/oder des Ritzels 34 kann in Richtung des gezeigten Pfeiles im Gegenuhrzeigersinn um die Drehachse 86 der Spindel 64 und des Ritzels 34 erfolgen.

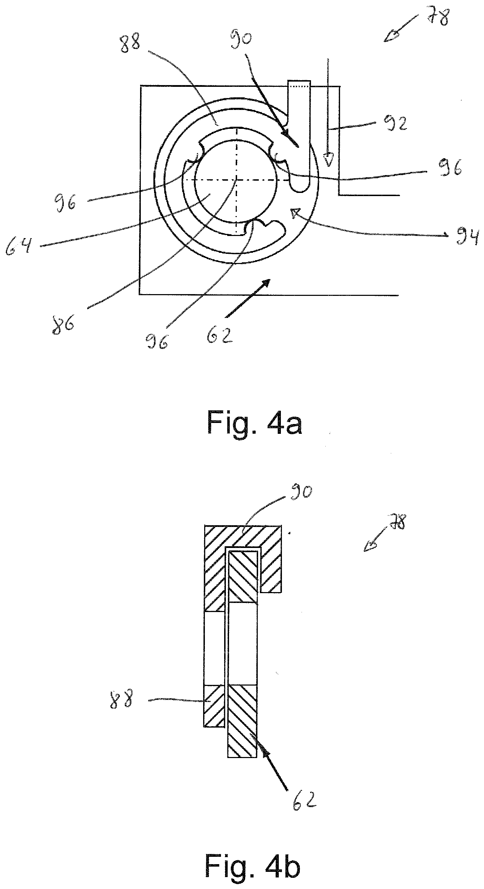

In Fig. 4a ist eine Keileinrichtung 78 mit integrierter Bremseinrichtung dargestellt in einer ersten Position dargestellt, in der keine Nachstellung der Reibungskupplung beabsichtigt ist. Ein Federring 88 ist konzentrisch an der Spindel 64 angeordnet. Der Federring 88 weist einen Haltesteg 90 auf, welcher tangential an dem Federring 88 angeordnet ist und oberhalb der Drehachse 86 der Spindel 64 an dem Spindelhalter 62 formschlüssig durch überhaken befestigt ist. Der Haltesteg 90 ist im Wesentlichen parallel zu einer Verlagerungsrichtung 92 der Spindel 64 und beabstandet zu der Drehachse 86 angeordnet. Der Federring 88 weist stirnseitig des Haltesteges 90 einen Schlitz 94 auf, wobei der Federring 88 in Richtung des Haltesteges 90 hakenartig unter einem Spitzenwinkel im Gegenuhrzeigersinn ausgebildet ist. An dem Federring 88 sind radial innenseitig drei Gegenreibflächen 96 zur Übertragung von Reibkräften durch den vorgespannt an der Spindel 64 anliegenden Federringes 88 auf die Spindel 64 angeordnet, wodurch ein unbeabsichtigtes Verdrehen der Spindel 64 vermieden werden kann. Oberhalb der Drehachse 86 sind zwei Gegenreibflächen 96 radial innenseitig an dem Federring 88 angeordnet, die die Spindel 64 umfänglich kontaktieren. Unterhalb der Drehachse 86 ist eine Gegenreibfläche 96 radial innenseitig an dem Federring 88 angeordnet, die die Spindel 64 umfänglich kontaktiert. Eine geschnittene Seitenansicht der Keileinrichtung 78 aus Fig. 4a ist in Fig. 4b gezeigt. Der Federring 88 mit dem Haltesteg 90 ist formschlüssig an dem Spindelhalter 62 angeordnet, wobei der Haltesteg 90 den Spindelhalter 62 an einer Oberseite, insbesondere an einer der Anpressplatte abgewandten Seite, teilweise umfasst.

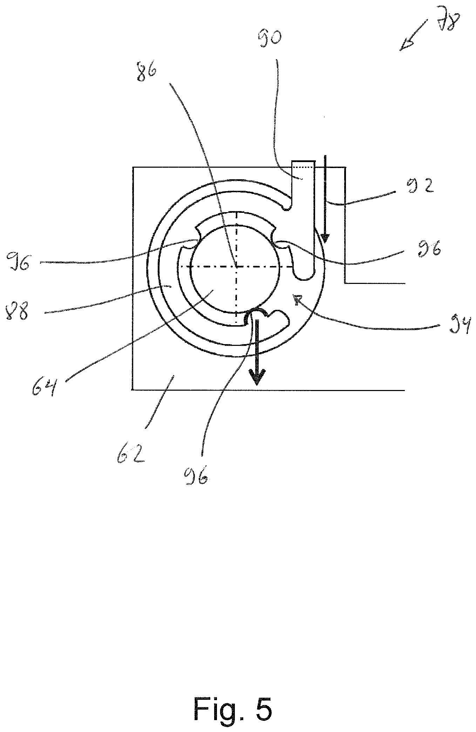

In Fig. 5 ist die Keileinrichtung 78 in der zweiten Position dargestellt, in der die Spindel 64 insbesondere durch eine in Verlagerungsrichtung 92 wirkende Kraft, beispielsweise einer Antriebsklinke, relativ zu dem Spindelhalter 62 in die Verlagerungsrichtung 92 verlagert ist. Der Federring 88 wird zumindest teilweise, insbesondere in einem oberen Bereich oberhalb der Drehachse 96, durch den Haltesteg 90 relativ zu dem Spindelhalter 62 fixiert. Durch die Verlagerung der Spindel 64 wird der Federring 88 elastisch verformt und aufgeweitet, wodurch die oberhalb der Drehachse 86 angeordneten Gegenreibflächen 96 keinen Kontakt zu der Spindel 64 aufweisen, jedoch die Gegenreibfläche 96 unterhalb der Drehachse 86 in Kontakt mit der Spindel 64 ist. Dadurch ist in der zweiten Position bedingt durch die Verlagerung der Spindel 64 nur noch eine der drei Gegenreibflächen 96 in Kontakt mit der Spindel 64. Dadurch kann die zum Verdrehen der Spindel 64 benötigte Kraft im Vergleich zu der ersten Position gesenkt werden. In der ersten Position wirken die Keileinrichtung 78 und die Bremseinrichtung auf die Spindel 64, wobei in der zweiten Position lediglich die Bremseinrichtung auf die Spindel 64 wirkt.

### Bezugszeichenliste

- 10: Reibungskupplung
- 12: Rotationsachse
- 14: Nachstelleinrichtung
- 16: Kupplungsgehäuse
- 18: Anpressplatte
- 20: Hebelsystem
- 22: Tellerfeder
- 24: Tellerfederzungen
- 26: Drahtring
- 28: Kraftrand
- 30: Rampenring
- 32: Verdreheinrichtung
- 34: Ritzel
- 36: Steuereinrichtung
- 38: Federelement
- 40: Antriebsklinke
- 42: Anschlag
- 44: Bolzen
- 46: Kopf
- 48: Anlagefläche
- 50: Rampensystem
- 52: Aufnahme
- 54: Öffnungen
- 56: Gegenrampen
- 58: Rampen
- 60: Ringfläche
- 62: Spindelhalter
- 64: Spindel
- 66: Spindelmutter
- 68: Spindelgewinde
- 70: Umfangsprofil
- 72: Außenprofil
- 74: Ausnehmung
- 76: Lasche
- 78: Keileinrichtung
- 80: Keil
- 82: Feder
- 84: Kontaktfläche
- 86: Drehachse
- 88: Federring
- 90: Haltesteg
- 92: Verlagerungsrichtung
- 92: Schlitz
- 96: Gegenreibflächen

## Patentansprüche

1. Reibungskupplung (10) mit einem Kupplungsgehäuse (16) mit einer drehfest und axial begrenzt zu diesem verlagerbaren Anpressplatte (18), die von einem sich am Kupplungsgehäuse (16) abstützenden Hebelsystem (20) gegenüber einer am Kupplungsgehäuse (16) fest angeordneten Gegendruckplatte unter Verspannung von Reibbelägen einer Kupplungsscheibe zum Öffnen und Schließen der Reibungskupplung (10) axial verlagerbar ist, wobei während eines Hubs der Anpressplatte (18) in Abhängigkeit von einer Änderung eines Abstands zwischen Gegendruckplatte und Hebelsystem (20) eine Antriebsklinke (40) auf einem Umfangsprofil (70) eines Ritzels (34), das mit einer um eine Drehachse (86) verdrehenden und in einem Spindelhalter (62) gelagerten Spindel (64) verbundenen ist, gleitet und bei Erreichen einer Verschleißgrenze mit dem Umfangsprofil (70) einen Formschluss bildet und beim nächsten Hub das Ritzel (34) verdreht, eine Bremseinrichtung mit mindestens einem Federring (88) und mindestens zwei Gegenreibflächen (96) zur Verhinderung einer Rückdrehung der Spindel (64), **dadurch gekennzeichnet, dass** die Reibungskupplung (10) eine federbelastete Keileinrichtung (78) zum Klemmen der Spindel (64) und/oder des Ritzels (34) aufweist, und die Spindel (64) durch eine mittels der Antriebsklinke (40) in eine Verlagerungsrichtung (92) wirkende Kraft relativ zum Spindelhalter (62) verlagerbar ist.

2. Reibungskupplung nach Anspruch 1, **dadurch gekennzeichnet, dass** die Keileinrichtung (78) in die Bremseinrichtung, insbesondere in den Federring (88) der Bremseinrichtung, integriert ist.

3. Reibungskupplung nach Anspruch 2, **dadurch gekennzeichnet, dass** der Federring (88) einen Haltesteg (90) zur Fixierung des Federringes (88) relativ zu der Drehachse (86) in axialer Richtung aufweist.

4. Reibungskupplung nach einem der vorherigen Ansprüche, **dadurch gekennzeichnet, dass** der Haltesteg (90) oberhalb der Drehachse (86) anpressplattenseitig angeordnet ist.

5. Reibungskupplung nach einem der vorherigen Ansprüche, **dadurch gekennzeichnet, dass** der Haltesteg (90) tangential an dem Federring (88) ausgebildet ist.

6. Reibungskupplung nach einem der vorherigen Ansprüche, **dadurch gekennzeichnet, dass** die Anzahl der oberhalb der Drehachse (86) angeordneten Gegenreibflächen (96) größer ist als die Anzahl der unterhalb der Drehachse (86) angeordneten Gegenreibflächen (96).

7. Reibungskupplung nach einem der vorherigen Ansprüche, **dadurch gekennzeichnet, dass** der Federring (88), insbesondere diametral gegenüber dem Haltesteg (90), einen Schlitz (94) aufweist.

8. Reibungskupplung nach einem der vorherigen Ansprüche, **dadurch gekennzeichnet, dass** der Schlitz (94) des Federringes (88) stirnseitig an einem tangential an dem Federring (88) ausgebildeten Haltesteg (90) ausgebildet ist.

9. Reibungskupplung nach einem der vorherigen Ansprüche, **dadurch gekennzeichnet, dass** der Haltesteg (90) an dem Spindelhalter (62) angeordnet ist.

10. Antriebsstrang für ein Kraftfahrzeug mit mindestens einer Reibungskupplung (10) nach einem der Ansprüche 1 bis 9.

## Claims

1. Friction clutch (10) having a clutch housing (16) with a pressure plate (18) which is rotationally fixed and axially displaceable relative to said housing to a limited extent, which pressure plate can, by way of a lever system (20) which is supported on the clutch housing (16), be displaced axially relative to a counterpressure plate, which is arranged fixedly on the clutch housing (16), so as to brace friction linings of a clutch disc for opening and closing the friction clutch (10), wherein, during a stroke of the pressure plate (18) depending on a change in the distance between the counterpressure plate and the lever system (20), a drive pawl (40) slides on a circumferential profile (70) of a pinion (34), which is connected to a spindle (64) which rotates about a rotation axis (86) and is mounted in a spindle holder (62), and, when a wear limit is reached, forms a form-fit with the circumferential profile (70) and, during the next stroke, turns the pinion (34), and a brake device with at least one spring ring (88) and at least two counterpart friction surfaces (96) for preventing the spindle (64) from turning back, **characterized in that** the friction clutch (10) has a spring-loaded wedge device (78) for clamping the spindle (64) and/or the pinion (34), and the spindle (64) is displaceable relative to the spindle holder (62) by a force which acts in a displacement direction (92) by means of the drive pawl (40).

2. Friction clutch according to Claim 1, **characterized in that** the wedge device (78) is integrated in the brake device, in particular in the spring ring (88) of the brake device.

3. Friction clutch according to Claim 2, **characterized in that** the spring ring (88) has a retaining web (90) for fixing the spring ring (88) relative to the rotation axis (86) in the axial direction.

4. Friction clutch according to one of the preceding claims, **characterized in that** the retaining web (90) is arranged above the rotation axis (86) on the pressure plate side.

5. Friction clutch according to one of the preceding claims, **characterized in that** the retaining web (90) is formed tangentially on the spring ring (88).

6. Friction clutch according to one of the preceding claims, **characterized in that** the number of counterpart friction surfaces (96) arranged above the rotation axis (86) is greater than the number of counterpart friction surfaces (96) arranged below the rotation axis (86).

7. Friction clutch according to one of the preceding claims, **characterized in that** the spring ring (88) has a slot (94), in particular diametrically opposite the retaining web (90).

8. Friction clutch according to one of the preceding claims, **characterized in that** the slot (94) of the spring ring (88) is formed on the end side of a retaining web (90) which is formed tangentially on the spring ring (88) .

9. Friction clutch according to one of the preceding claims, **characterized in that** the retaining web (90) is arranged on the spindle holder (62).

10. Drive train for a motor vehicle comprising at least one friction clutch (10) according to one of Claims 1 to 9.

## Revendications

1. Embrayage (10) à friction présentant un carter d'embrayage (16) comprenant
une plaque de poussée (18) bloquée en rotation et pouvant être déplacée axialement de manière limitée par rapport au carter, la plaque de poussée pouvant être déplacée axialement par un système de levier (20) qui s'appuie sur le carter d'embrayage (16), par rapport à une plaque de contre-poussée disposée fixement sur le carter d'embrayage (16) en serrant des garnitures de frottement d'un disque d'embrayage en vue d'ouvrir et de fermer l'embrayage à friction (10), lors d'une course de la plaque de poussée (18) en fonction d'une variation d'une distance entre la plaque de contre-poussée et le système de levier (20) un cliquet d'entraînement (40) glissant sur un profil périphérique (70) d'un pignon (34) relié à une broche (64) tournant autour d'un axe de rotation (86) et montée sur un support de broche (62) et, lorsqu'une limite d'usure est atteinte, entrant en correspondance géométrique avec le profil périphérique (70) et faisant tourner le pignon (34) lors de la course suivante et
un dispositif de freinage présentant au moins une bague élastique (88) et au moins deux surfaces complémentaires de frottement (96) pour empêcher une rotation en recul de la broche (64),
**caractérisé en ce que**
l'embrayage à friction (10) présente un dispositif (78) de biseau sollicité élastiquement qui serre la broche (64) et/ou le pignon (34) et
**en ce que** la broche (64) peut être déplacée par rapport au support de broche (62) par une force qui agit dans une direction de déplacement (92) au moyen du cliquet d'entraînement (40).

2. Embrayage à friction selon la revendication 1, **caractérisé en ce que** le dispositif (78) à biseau est intégré dans le dispositif de freinage et en particulier dans la bague élastique (88) du dispositif de freinage.

3. Embrayage à friction selon la revendication 2, **caractérisé en ce que** la bague élastique (88) présente une nervure de maintien (90) qui immobilise la bague élastique (88) dans la direction axiale par rapport à l'axe de rotation (86).

4. Embrayage à friction selon l'une des revendications précédentes, **caractérisé en ce que** la nervure de maintien (90) est disposée au-dessus de l'axe de rotation (86), du côté de la plaque de poussée.

5. Embrayage à friction selon l'une des revendications précédentes, **caractérisé en ce que** la nervure de maintien (90) est disposée tangentiellement entre la bague élastique (88).

6. Embrayage à friction selon l'une des revendications précédentes, **caractérisé en ce que** le nombre des surfaces complémentaires de frottement (96) disposées au-dessus de l'axe de rotation (86) est supérieur au nombre des surfaces complémentaires de frottement (96) disposées en dessous de l'axe de rotation (86).

7. Embrayage à friction selon l'une des revendications précédentes, **caractérisé en ce que** la bague élastique (88) présente une fente (94) disposée en particulier en position diamétralement opposée à la nervure de maintien (90).

8. Embrayage à friction selon l'une des revendications précédentes, **caractérisé en ce que** la fente (94) de la bague élastique (88) est formée frontalement sur une nervure de maintien (90) formée sur la bague élastique (88).

9. Embrayage à friction selon l'une des revendications précédentes, **caractérisé en ce que** la nervure de maintien (90) est disposée sur le support de broche (62).

10. Train d'entraînement pour véhicule automobile présentant au moins un l'embrayage à friction (10) selon l'une des revendications 1 à 9.
